**Europäisches Patentamt**

**European Patent Office**

**Office européen des brevets**

(19)

(11) Veröffentlichungsnummer: **0 031 420**
**B1**

(12) ## EUROPÄISCHE PATENTSCHRIFT

(45) Veröffentlichungstag der Patentschrift:
**30.05.84.**

(21) Anmeldenummer: **80106692.9**

(22) Anmeldetag: **31.10.80**

(51) Int. Cl.³: **F 16 G 3/10**

(54) **Verfahren zur Herstellung einer Verbindungsstelle an Fördergurten oder dergl. und Verbindungsplatte für eine solche Verbindungsstelle.**

(30) Priorität: **28.12.79 DE 2952676**

(43) Veröffentlichungstag der Anmeldung:
**08.07.81 Patentblatt 81/27**

(45) Bekanntmachung des Hinweises auf die Patenterteilung:
**30.05.84 Patentblatt 84/22**

(84) Benannte Vertragsstaaten:
**AT BE CH FR GB IT LI LU NL SE**

(56) Entgegenhaltungen:
**US - A - 2 750 314**
**US - A - 2 750 315**
**US - A - 2 985 222**
**US - A - 3 224 566**

**Die Akte enthält technische Angaben, die nach dem Eingang der Anmeldung eingereicht wurden und die nicht in dieser Patentschrift enthalten sind.**

(73) Patentinhaber: **PETER-BTR Gummiwerke Aktiengesellschaft, D-6450 Hanau 8 (DE)**

(72) Erfinder: **Thies, Peter, Falkenweg 34, D-5828 Ennepetal-Voerde (DE)**

(74) Vertreter: **Keil, Rainer A., Dr.Dipl.-Phys. et al, Patentanwälte MERTENS & KEIL Ammelburgstrasse 34, D-6000 Frankfurt am Main 1 (DE)**

## Beschreibung

Die Erfindung betrifft ein Verfahren zur Herstellung einer Verbindungsstelle an Fördergurten od. dgl. aus Gummi oder Gummiaustauschstoffen mit wenigstens zwei, durch eine Zwischengummilage getrennten, gummierten Zugträgereinlagen, z.B. Gewebezugträgereinlagen, und beidseitig je einer Deckplattengummilage, wobei aus den in der Verbindungsstelle zusammengeführten Gurtenden jeweils wenigstens ein Endabschnitt der Zwischengummilage herausgetrennt, beim Zusammenführen der Gurtenden in den frei gewordenen Raum eine die Nahtstelle zwischen den Gurtenden überbrückende, Zugträgereinlagen aufweisende, vulkanisierte Verbindungsplatte aus Kautschuk eingelegt und diese mit den angrenzenden Zugträgereinlagen unter Anwendung von Druck und gegebenenfalls bei erhöhter Temperatur und Verwendung eines Bindemittels fest verbunden wird.

Aus der US-A-3 224 566 ist ein Verfahren zur Herstellung einer Verbindungsstelle an Fördergurten aus Gummi oder Gummiaustauschstoffen mit wenigstens zwei, durch eine Zwischengummilage getrennten, gummierten Zugträgereinlagen und beidseitig je einer Deckplattengummilage bekannt, wobei aus den in der Verbindungsstelle zusammengeführten Gurtenden jeweils ein Endabschnitt der Zwischengummilage herausgetrennt, beim Zusammenfügen der Gurtenden in den frei gewordenen Raum eine die Nahtstellen zwischen den Gurtenden überbrückende, Zugträgereinlagen aufweisende, vulkanisierte Verbindungsplatte eingelegt und diese nach Zufügen eines Klebstoffes mit den angrenzenden Zugträgereinlagen unter Anwendung von Druck und Temperatur fest verbunden wird. Dabei besteht die Verbindungsplatte aus gummiertem Bindetuch oder aus einem klebstoffbeschichteten textilen Material mit den gleichen physikalischen Eigenschaften wie diejenigen der Zugträgereinlagen des Gurtes selbst. Eine so geschaffene Gurtverbindung hat erfahrungsgemäss nur beschränkte Festigkeit und Dauerhaftigkeit.

Das eingangs genannte Verfahren ist auch unter Verwendung einer unvulkanisierten Verbindungsplatte und Anwendung der Heissvulkanisation an sich bekannt. Dazu bedarf es einer aufwendigen Vorbereitung der unvulkanisierten Verbindungsplatte. Die Lagerung solcher unvulkanisierter Verbindungsplatten ist aus verschiedenen Gründen problematisch. Die Oberflächen von längere Zeit gelagerten Verbindungsplatten eignen sich beispielsweise nicht ohne weiteres für die zuverlässige Festlegung in der Verbindungsstelle. Dies liegt einmal daran, dass die Oberfläche bei der Lagerung verschmutzen kann. Ausserdem können die Oberflächen der Verbindungsplatte oxidieren und es können bei der Lagerung Bestandteile aus dem Inneren der Verbindungsplatte an die Verbindungsflächen wandern. Hierdurch wird ein gutes Einvulkanisieren der Verbindungsplatte an die angrenzenden Zugträgereinlagen in der Verbindungsstelle beeinträchtigt. Deswegen hat man bisher die Oberflächen der unvulkanisierten Verbindungsplatte vor der Einfügung und Einvulkanisation in die Verbindungsstelle, beispielsweise mit Lösungsmittel gereinigt und aufgefrischt. Diese Auffrischarbeit ist relativ zeitaufwendig und führt oft nicht zu dem gewünschten Erfolg.

Es ist auch bekannt, Gurtverbindungen mit Hilfe der Kaltklebetechnik herzustellen. Dabei werden mindestens zwei oder mehrere Zugträgereinlagen nach treppenförmiger Abstufung unter Beibehaltung der Zwischengummilagen miteinander verklebt. Die Verbindungsstelle wird dadurch erheblich dicker als der übrige Gurt. Da insbesondere im Untertagebergbau vergleichsweise geringe Trommeldurchmesser verwendet werden, haben solche mit der Kaltklebetechnik hergestellte Verbindungsstellen nur begrenzte Haltbarkeit. Die Gurte fallen schnell aus.

Aufgabe der vorliegenden Erfindung ist es daher, ein auch für die Kaltverklebungstechnik anwendbares Verfahren zur Herstellung einer Verbindungsstelle an Fördergurten od. dgl. vorzuschlagen, welches zu einer hochfesten Verbindungsstelle führt, die nicht dicker als der übrige Fördergurt ist.

Diese Aufgabe wird bei einem Verfahren der gattungsgemässen Art dadurch gelöst, dass man eine Verbindungsplatte verwendet, die auf ihren beiden Flachseiten ein Gewebe als Schutzgewebe aufvulkanisiert trägt, welches Gewebe man kurz vor dem Einlegen der Verbindungsplatte in die Verbindungsstelle abzieht.

Auf diese Weise können sich eine eventuelle Oberflächenverschmutzung und/oder Oxidation der Verbindungsplatte bei Transport und Lagerung nicht schädlich auswirken, da beide Einflüsse mit dem Abreissen des mit der Kautschukmischung durchdrungenen Schutzgewebes unmittelbar vor dem Einsatz der Verbindungsplatte beseitigt werden. In gleicher Weise verschwinden auch die an die Oberfläche der Verbindungsplatte aus der Gummimischung gewanderten Bestandteile, die das Einvulkanisieren der Verbindungsplatte in die Verbindungsstelle beeinträchtigen könnten, unmittelbar vor der Verwendung der Verbindungsplatte. Das erfindungsgemässe Gewebe kann bis zuletzt seine Schutzfunktion ausüben. Es hat sich gezeigt, dass sich die bei Verwendung eines erfindungsgemässen Schutzgewebes frisch gerissene Verbindungsfläche aufgrund der besonderen Oberflächenstruktur besonders für das Einvulkanisieren der Verbindungsplatte in die Verbindungsstelle eignet. Bei dem Abreissen der in das Gewebe eingedrungenen Gummischicht zusammen mit dem Schutzgewebe entstehen nämlich nicht nur eine blosse Oberflächenvergrösserung, sondern zwischen den Kreuzungspunkten der Gewebefäden auch zerklüftete Gummibrüche unter Bildung pilzförmiger Stümpfe, welche die Verankerungsfähigkeit der Verbindungsflächen der Verbindungsplatte an den angrenzenden gummierten Zugträgereinlagen besonders günstig beeinflussen.

Die Anforderungen, die an ein nach der Erfindung vorzusehendes Schutzgewebe gestellt werden müssen, widersprechen einander: Einmal soll eine möglichst grosse Oberflächenvergrösserung auf den Verbindungsflächen der Verbindungsplatte eintreten, was jedoch zu einer übermässig grossen Abreisskraft führt; zum anderen soll die Abreisskraft möglichst niedrig sein, weswegen aber das Gewebe so ausgebildet sein muss, dass die Oberflächenvergrösserung der Verbindungsflächen nicht ausreicht. Wenn das Gewebe, vorzugsweise Kreuzgewebe, aus Polyester und/oder Polyamid als Grundmaterial besteht, eine Fadenfeinheit zwischen etwa 60 und 240 dtex, vorzugsweise 67 und 140 dtex und eine Fadendichte in Kettrichtung und in Schussrichtung jeweils zwischen etwa 45 und 25 Fäden/cm, vorzugsweise 36 und 28 Fäden/cm hat, kann man diesen beiden widerstreitenden Anforderungen in optimaler Weise gerecht werden. Durch die Verwendung eines solchermassen leicht abreissbaren Schutzgewebes der erfindungsgemässen Art kann dieses bis unmittelbar vor dem Einbringen in die Verbindungsstelle an der Verbindungsplatte verbleiben. Das Abreissen erfolgt erst unmittelbar an Ort und Stelle bei der Herstellung der Verbindungsstelle. Die Abreisskräfte liegen nur zwischen etwa 0,25 N/cm, vorzugsweise zwischen 1 und 3 N/cm, so dass das Schutzgewebe ohne weiteres von Hand abgerissen werden kann. Gleichwohl entsteht aufgrund der zuvor geschilderten Umstände eine hinreichend grosse Oberflächenvergrösserung. Dieses besondere Schutzgewebe ist auch so beschaffen, dass die Kautschukmischung bei der Herstellung der Verbindungsplatte gut durch das Schutzgewebe unter Bildung einer geschlossenen Gummihaut auf der Rückseite des Schutzgewebes hindurchdringt, so dass sich später die zuvor erwähnten Gummibrüche bilden. Dieser Effekt wirkt sich damit vorteilhaft auf die für eine gute Anvulkanisation oder Verklebung von Verbindungsplatte und Zugträgereinlagen in der Verbindungsstelle benötigte Oberflächenstrukturierung aus. Dabei werden auch eventuell im Schutzgewebe enthaltene Stoffe, die einer guten Anvulkanisation oder Kaltverklebung abträglich sein könnten, mit dem Durchdringen der Kautschukmischung durch das Schutzgewebe von dieser aufgenommen und aus der Verbindungsebene entfernt.

Es ist beispielsweise mit der Erfindung auch möglich, dass den das Schutzgewebe tragenden Flächen der Verbindungsplatte künstlich Unebenheiten eingeprägt werden, die dem Negativ eines diese Fläche bildenden Teils einer Pressform entsprechen. Damit kann einerseits ein relativ feines Schutzgewebe eingesetzt werden, welches vergleichsweise leicht von der Verbindungsplatte abziehbar ist, während anderseits die Unebenheiten relativ gross und daher relativ einfach beim Herstellen der Verbindungsplatte in einer Pressform einformbar sind. Auf diese Weise kommt der Vorteil hinzu, dass nach dem Abziehen des zunächst den in die Fläche eingeformten Unebenheiten folgenden Schutzgewebes die rauhe Verbindungsfläche sowohl durch die beim Pressen der Verbindungsplatten vorgeformten relativ grossen Unebenheiten, als auch die fein strukturierten Unebenheiten, die beim Abziehen des Gewebes entstehen, bestimmt wird.

Mit besonderem Vorteil kann das erfindungsgemässe Verfahren dadurch ausgeführt werden, dass man die Verbindungsplatte durch Kaltklebung unter Verwendung eines Gummihaftklebers, z.B. Neopren- oder Polychloropren-Kleber, in der Verbindungsstelle befestigt. Auf diese Weise entsteht eine auf der Kaltklebungstechnik beruhende Verbindungsstelle, die keine grössere Dicke hat, als eine solche, die bisher nur mit Hilfe der Heissvulkanisation erzeugt werden konnte. Die Verbindungsstelle ist daher auch bei der Verwendung des Fördergurtes auf Trommeln vergleichsweise kleinen Durchmessers über grössere Zeit haltbar.

Die Erfindung bezieht sich auch auf eine Verbindungsplatte aus vulkanisiertem Kautschuk mit Zugträgereinlagen für die Verwendung in einer nach dem erfindungsgemässen Verfahren hergestellten Verbindungsstelle.

Eine solche Verbindungsplatte trägt erfindungsgemäss auf ihren beiden Flachseiten ein kurz vor dem Einlegen in die Verbindungsstelle abzuziehendes Gewebe als Schutzgewebe aufvulkanisiert. Mit Hilfe einer solchen Verbindungsplatte lässt sich in dem einfachen und zuverlässigen erfindungsgemässen Verfahren eine sehr tragfähige Verbindungsstelle herstellen.

Die Erfindung ist nicht beschränkt auf Fördergurte, Tragriemen od. dgl., die lediglich zwei Zugträgereinlagen aufweisen, welche durch eine Zwischengummilage getrennt ist. Das erfindungsgemässe Verfahren ist ebenso anwendbar für Fördergurte, Treibriemen od. dgl., die mehr als zwei Zugträgereinlagen aufweisen, zwischen denen jeweils eine Zwischengummilage angeordnet ist. Dann wird das erfindungsgemässe Prinzip der Einlegung einer Verbindungsplatte in jedem einander zugeordneten Bereich von Zwischengummilagen in der Verbindungsstelle vorgenommen.

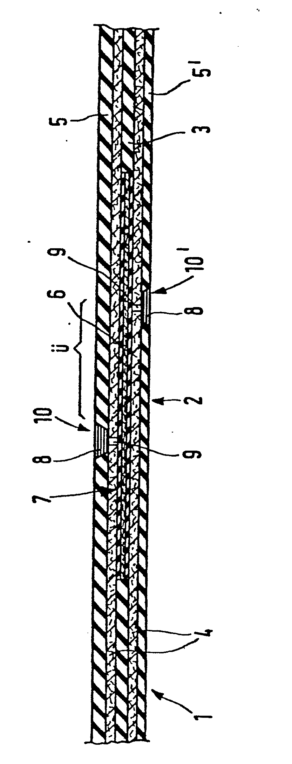

In der nachfolgenden Beschreibung wird ein Ausführungsbeispiel anhand der beiliegenden Zeichnung näher erläutert.

Die einzige Figur veranschaulicht (weggebrochen) einen die Erfindung aufweisenden Fördergurt im Bereich der Verbindungsstelle.

Der Gurt 1 weist seiner Konstruktion nach zwei Zugträgereinlagen 4, hier Gewebezugträgereinlagen auf, die von einer Zwischengummilage 3 getrennt sind und auf welchen aussen je eine Deckplattengummilage 5, 5' befestigt ist. Eine Verbindungsstelle 2 an einem solchen Gurt 1 ist insbesondere dann notwendig, wenn aus einem endlichen Gurtstück durch Zusammenfügen der Enden ein geschlossener Gurt hergestellt werden soll. Zu diesem Zweck ist im Bereich der in die Verbindungsstelle geführten Gurtenden jeweils die Zwischengummilage 3 über einen gewissen Bereich herausgetrennt. Ausserdem sind in dem dargestellten Fall die bezüglich der Gurtmittelebene diametral einander gegenüberliegenden Zugträgereinlagen 4 und Deckplattengummilagen 5, 5′ so unterschiedlich gekürzt, dass bei der Zusammenfügung der Enden eine Überlappung im Bereich Ü stattfindet. In den durch das Heraustrennen der beiden Zwischengummilagenabschnitte entstandenen freien Raum ist eine vulkanisierte Verbindungsplatte 7 eingefügt. Diese vulkanisierte Verbindungsplatte 7 trägt auf ihren beiden Flachseiten bis unmittelbar vor ihrer Einfügung in die Verbindungsstelle ein (in der Querschnittsdarstellung nicht veranschaulichtes) aufvulkanisiertes Gewebe, welches dann unmittelbar vor der Verwendung der Verbindungsplatte 7 von diesen Oberflächen abgezogen wird. So entsteht eine frische Verbindungsfläche an der Verbindungsplatte 7, die eine zuverlässige Befestigung an den angrenzenden Oberflächenbereichen der Zugträgereinlagen 4 gewährleistet. Aufgrund der Heraustrennung der Zwischengummilagenbereiche, an deren Stelle die Verbindungsplatte 7 tritt, erst unmittelbar vor der Herstellung der Verbindungsstelle 2 haben auch die gummierten Oberflächen der Zugträgereinlagen 4 eine frisch gerissene Verbindungsfläche, die der Befestigung der Verbindungsplatte 7 durch Vulkanisation oder Kaltverklebung förderlich ist. Die Verbindungsplatte 7 weist entsprechend der Darstellung selbst eine Zugträgereinlage 6 auf. Die Verbindungsplatte 7 erstreckt sich über die beiden Nahtstellen 9 zwischen den jeweils zugeordneten Zugträgereinlagen 4 als auch über die beiden Nahtstellen 10 und 10′ zwischen den jeweils zugeordneten Deckplattengummilagen 5 und 5′. In die Nahtstellen 10, 10′ sind jeweils Nahtstreifen 8 eingefügt und befestigt.

**Patentansprüche**

1. Verfahren zur Herstellung einer Verbindungsstelle (2) an einem Fördergurt od. dgl. (1) aus Gummi oder Gummiaustauschstoffen mit wenigstens zwei, durch eine Zwischengummilage (3) getrennten, gummierten Zugträgereinlagen (4), z. B. Gewebezugträgereinlagen, und beidseitig je einer Deckplattengummilage (5), wobei aus den in der Verbindungsstelle (2) zusammengeführten Gurtenden jeweils wenigstens ein Endabschnitt der Zwischengummilage (3) herausgetrennt, beim Zusammenfügen der Gurtenden in den frei gewordenen Raum eine die Nahtstellen (9; 10, 10′) zwischen den Gurtenden überbrückende, Zugträgereinlagen (6) aufweisende vulkanisierte Verbindungsplatte (7) aus Kautschuk eingelegt und diese mit den angrenzenden Zugträgereinlagen (4) unter Anwendung von Druck und gegebenenfalls bei erhöhter Temperatur und unter Verwendung eines Bindemittels fest verbunden wird, dadurch gekennzeichnet, dass man eine Verbindungsplatte (7) verwendet, die auf ihren beiden Flachseiten ein Gewebe als Schutzgewebe aufvulkanisiert trägt, welches Gewebe man kurz vor dem Einlegen der Verbindungsplatte (7) in die Verbindungsstelle (2) abzieht.

2. Verfahren nach Anspruch 1, dadurch gekennzeichnet, dass man eine nur vorvulkanisierte Verbindungsplatte (7) verwendet.

3. Verfahren nach Anspruch 1 oder 2, dadurch gekennzeichnet, dass das Gewebe, vorzugsweise Kreuzgewebe, folgende Eigenschaften hat:

a) Grundmaterial: Polyester und/oder Polyamid,

b) Fadenfeinheit: zwischen etwa 60 und 240 dtex, vorzugsweise 67 und 140 dtex,

c) Fadendichte: in Kettrichtung und in Schussrichtung jeweils zwischen etwa 45 und 25 Fäden/cm, vorzugsweise 36 und 28 Fäden/cm.

4. Verfahren nach den Ansprüchen 1 bis 3, dadurch gekennzeichnet, dass man die Verbindungsplatte (7) durch Kaltklebung unter Verwendung eines Gummihaftklebers, z. B. Neopren- oder Polychloropren-Klebers, in der Verbindungsstelle (2) befestigt.

5. Verbindungsplatte (7) aus vulkanisiertem Kautschuk mit Zugträgereinlagen (4), die auf ihren beiden Flachseiten ein kurz vor dem Einlegen in die Verbindungsstelle (2) abzuziehendes Gewebe als Schutzgewebe aufvulkanisiert trägt, zur Verwendung in einer nach dem Verfahren der Ansprüche 1 bis 4 hergestellten Verbindungsstelle (2).

**Claims**

1. A method of making a junction (2) in a conveyor belt (1) or the like of rubber or rubber substitutes, comprising at least two rubber-coated traction supporting inserts (4), e.g. fabric traction supporting inserts, separated by an intermediate rubber layer (3), and comprising at both sides thereof respectively one covering plate rubber layer (5), with respectively at least one end section of the intermediate rubber layer (3) being removed from the belt ends joined in the junction (2), a vulcanized connecting plate (7) of caoutchouc provided with traction supporting inserts (6) and bridging joints (9; 10, 10′) between the belt ends being inserted into the cleared space during joining of the belt ends and, by using a binder being firmly connected to the neighboring traction supporting inserts (4) under the application of pressure and, if need be, at an elevated temperature, characterized in that a connecting plate (7) is used carrying on the two flat sides thereof a fabric forming the protective fabric which is withdrawn immediately prior to inserting the connecting plate (7) into the junction (2).

2. A method according to claim 1, characterized in that a merely pre-vulcanized connecting plate (7) is used.

3. A method according to claims 1 or 2, characterized in that the fabric, preferably crossed fabric, exhibits the following properties:

a) base material: polyester and/or polyamide,

b) thread fineness: between about 60 and 240 dtx, preferably between 67 and 140 dtex,

c) sett: in the direction of warp and in the direction of weft respectively between about 45 and 25 threads/cm, preferably between 36 and 28 threads/cm.

4. A method according to claims 1 to 3, characterized in that the connecting plate (7) is secured in junction (2) by cold spreading, using a rubber adhesive, e.g. a neoprene or polychloroprene adhesive.

5. A connecting plate (7) of vulcanized caoutchouc comprising traction supporting inserts (4), carrying on the two flat sides thereof, vulcanized thereon, a fabric forming the protective fabric to be withdrawn immediately prior to insertion into the junction (2), for use with a junction (2) produced according to the method of claims 1 to 4.

**Revendications**

1. Procédé pour réaliser un raccordement (2) sur une bande transporteuse (1) ou analogue, faite de caoutchouc ou de matières de remplacement du caoutchouc, qui comporte au moins deux insertions caoutchoutées (4) supportant la traction, par example des insertions caoutchoutées en tissu supportant la traction, qui sont séparées l'une de l'autre par une couche de caoutchouc intercalaire (3), et de part et d'autre de ces insertions, une couche de caoutchouc formant plaque de couverture (5), procédé selon lequel on enlève, des extrémités de la bande réunies dans le raccordement (2), au moins une partie d'extrémité de la couche de caoutchouc intercalaire (3), selon lequel, lors de la réunion des extrémités de la bande, on place, dans l'espace devenue libre, une plaque de jonction vulcanisée (7) en caoutchouc qui comporte des insertions (6) supportant la traction et qui ponte les endroits de soudage (9; 10, 10') entre les extrémités de la bande, et selon lequel on fixe fermement cette plaque de jonction aux insertions (4) supportant la traction qui en sont voisines sous l'application d'une pression et, éventuellement, sous accroissement de la température et sous l'utilisation d'un liant, le procédé étant caractérisé en ce qu l'on utilise une plaque de jonction (7) qui porte, aux deux face planes, y fixé par vulcanisation un tissu jouant le rôle de tissue de protection, tissu que l'on enlève peu avant de poser la plaque de jonction (7) à l'endroit de raccordement (2).

2. Procédé suivant la revendication 1, caractérisé en ce que l'on utilise une plaque de raccordement (7) seulement prévulcanisée.

3. Procédé suivant les revendications 1 ou 2, caractérisé en ce que le tissu, de préférence un tissu à tissage en croix, présente les propriétés qui sont indiquées ci-après:

a) matière de base: polyester et/ou polyamide,

b) finesse du fil: entre environ 60 dtex et 240 dtex et, de préférence, entre 67 dtex et 140 dtex,

c) densité du fil: dans le sens de la chaine et dans le sens de la trame, d'environ 45 fils/cm à 25 fils/cm et, de préférence, de 36 fils/cm à 28 fils/cm.

4. Procédé suivant les revendications 1 à 3, caractérisé en ce que l'on fixe la plaque de jonction (7) à l'endroit de raccordement (2), par collage à froid, en utilisant une colle d'adhérence au caoutchouc, par exemple une colle au néoprène ou une colle au polychloroprène.

5. Plaque de jonction (7) faite de caoutchouc vulcanisé, comportant des insertions (4) supportant la traction, qui porte, aux deux faces planes, y fixé par vulcanisation, un tissu jouant le rôle de tissue de protection, tissu que l'on enlève peu avant de poser la plaque de jonction dans l'endroit de raccordement (2), pour l'utilisation avec un endroit de raccordement (2) produit selon le procédé suivant les revendications 1 à 4.

5  5'  3  9  6  ü  10  7  8  9  10'  8  2  4  1